# EUROPEAN PATENT SPECIFICATION

(11) **EP 3 654 568 B1**
(45) Date of publication and mention of the grant of the patent: **25.05.2022**
(21) Application number: 18846437.4
(22) Date of filing: 07.08.2018
(51) Int. Cl.: H04L 5/00, H04L 27/00, H04L 27/26, H04W 56/00

(54) **SYNCHRONIZATION METHOD AND APPARATUS FOR IOV SYSTEMS**
SYNCHRONISATIONSVERFAHREN UND -VORRICHTUNG FÜR IOV-SYSTEME
PROCÉDÉ ET APPAREIL DE SYNCHRONISATION POUR DES SYSTÈMES DE TYPE IOV

(30) Priority: 17.08.2017 CN 201710708136
(43) Date of publication of application: 20.05.2020
(73) Proprietor: Huawei Technologies Co., Ltd., Longgang District Shenzhen, Guangdong 518129 (CN)
(72) Inventor: GAO, Lei, Shenzhen Guangdong 518129 (CN); LIU, Deping, Shenzhen Guangdong 518129 (CN); LU, Zhenwei, Shenzhen Guangdong 518129 (CN)
(74) Representative: Pfenning, Meinig & Partner mbB
(86) International application number: PCT/CN2018/099258
(87) International publication number: WO 2019/033959

(56) References cited:
- EP-A1- 3 142 273
- EP-A2- 3 437 245
- WO-A1-2017/124338
- CN-A- 102 223 326
- CN-A- 105 453 507
- CN-A- 106 572 042
- US-B1- 8 781 036

## Description

### TECHNICAL FIELD

This application relates to the field of communications technologies, and in particular, a synchronization method and an apparatus.

### BACKGROUND

In recent years, people pay more attention to an internet-of-vehicles technology. An internet-of-vehicles system improves safety and reliability of road traffic and efficiency of traffic through communication between vehicles, transportation facilities and pedestrians. Status information needs to be exchanged periodically between user equipments (user equipment, UE) in the internet-of-vehicles system to ensure safe driving of vehicles, and therefore is referred to as a periodic status message (Periodic Status Message, PSM). A service cycle of the PSM may change based on a vehicle motion status, and values of service cycles of UEs in different movement statuses are from [100 ms, 1000 ms].

In an internet-of-vehicles system, when two UEs exchange data, signals of the two UEs need to perform time and frequency synchronization to enable a receive-end UE to correctly receive, in a time and frequency synchronization manner, data transmitted by transmit-end UE. In a current synchronization manner, UEs separately perform time and frequency synchronization based on a downlink synchronization signal sent by a base station. However, a 5G network (New Radio, NR) technology needs to support a higher frequency band and a larger bandwidth than long term evolution (Long Term Evolution, LTE), and therefore a plurality of optional combinations of a subcarrier spacing (Subcarrier Spacing, SCS) and cyclic prefix (Cyclic Prefix, CP) (including a normal cyclic prefix (Normal Cyclic Prefix, NCP) and an extended cyclic prefix (Extend Cyclic Prefix, ECP)) duration are designed. Table 1 shows some combinations of an SCS and CP duration that are supported in a current standard discussion.

**Table 1 Some combinations of an SCS and CP duration that are supported in an NR standard discussion**

| SCS (corresponding to duration of a symbol without a CP) | NCP duration | ECP duration |
|---|---|---|
| 15 kHz (67 µs) | 4.7 µs (5.2 µs) | 17 µs |
| 30 kHz (33 µs) | 2.3 µs (2.9 µs) | 8.3 µs |
| 60 kHz (17 µs) | 1.2 µs (1.7 µs) | 4.2 µs |
| 120 kHz (8.3 µs) | 0.59 µs (1.1 µs) | 2.1 µs |
| 240 kHz (4.2 µs) | 0.29 µs (0.81 µs) | 1.0 µs |
| 480 kHz (2.1 µs) | 0.15 µs (0.67 µs) | 0.52 µs |

Based on the combinations of the SCS and the CP provided in Table 1, if the UEs are synchronized by using the downlink synchronization signal delivered by the base station, referring to performance and requirement parameters of long term evolution (Long Term Evolution, LTE), a frequency error of the base station is ±0.05 PPM, a frequency synchronization error of the UEs for the received downlink synchronization signals is ±0.1 PPM, a highest speed of the UEs is 250 km/h, and a Doppler shift between UE and the base station and a Doppler shift between the UEs, an offset between data received by the UEs and a carrier frequency of the UEs may be any value between -78.5 kHz and 78.5 kHz (including -78.5 kHz and 78.5 kHz). When an SCS is less than a maximum frequency offset, the UE cannot perform frequency offset estimation on the received data. Therefore, SCS ≥ 120 kHz. Considering a case of SCS ≥ 120 kHz, a maximum communication distance 300 m between UEs is used as an example for calculation. A maximum time difference between arrival of a downlink synchronization signal at different UEs is 1 µs, and a maximum propagation delay of data from transmit UE to receive UE is 1 µs. In this case, a difference between a time at which the UE receives the data and a timing of the UE may be any value between 0 µs and 2 µs (including 0 µs and 2 µs). Therefore, CP duration should be greater than 2 µs; otherwise, if data receiving time exceeds a CP range, the data cannot be correctly received. In this case, only the combination of SCS = 120 kHz and an ECP can be selected. Even if this combination is selected, if CP duration is 2.1 µs, when a difference between a time at which the data is received and a timing of the UE is 2 µs, only remaining 0.1 µs covers a delay spread of a channel. Considering that antenna heights of a transmitter and a receiver in V2V communication are comparatively low, and a signal propagation environment is complex, a delay spread is comparatively larger. In this case, the remaining CP duration of 0.1 µs cannot resolve a problem caused by the delay spread.

In conclusion, the foregoing synchronization manner cannot meet a requirement of time synchronization between two UEs in an internet-of-vehicles system.

EP3142273A1 relates to a wireless communication system. Disclosed is a method for transmitting a synchronization signal for direction communication between terminals. A method for transmitting a synchronization signal according to one embodiment of the present invention comprises the steps of: mapping a synchronization signal for direction communication between terminals to a sub-frame comprising a first slot and a second slot; and transmitting, to a counterpart terminal, the sub-frame to which the synchronization signal is mapped, wherein the synchronization signal is mapped to four orthogonal frequency division multiple access (OFDM) symbols of the sub-frame, and at least two OFDM symbols of the four OFDM symbols may be adjacent to each other.

WO2017124338A1 discloses a method and apparatus for sending synchronization information, which relate to the field of communications and can ensure a higher synchronization precision in a communication scenario of low delay and high reliability, thereby improving the communication efficiency between devices. The method comprises: a first user equipment (UE) determining first synchronization information, the first synchronization information being used for indicating a priority level when the first UE is used as a synchronization source; and the first UE sending the first synchronization information, so that the second UE selects a synchronization source for the second UE according to the received first synchronization information.

### SUMMARY

This application provides a synchronization method and an apparatus, to resolve a problem that the foregoing synchronization manner cannot meet a requirement of time synchronization between two UEs in an internet-of-vehicles system.

Aspects of the present invention are provided in the independent claims. Preferred embodiments are provided in the dependent claims.

In the claimed solution, it should be understood that the second UE may not only synchronize the first signal by using the first sequence, but also perform measurement, channel estimation, and the like based on the first sequence. In this solution, the first sequence used for user synchronization is sent in a symbol of a non-starting part of each data transmission, so that when CP duration of a data sending symbol cannot satisfy a time synchronization requirement, the second UE can still implement time synchronization on currently received data by using the first sequence, and implement frequency synchronization by performing frequency offset estimation by using a CP structure.

In the claimed solution, synchronization enhancement is performed based on initial synchronization. Due to the CP structure of the symbol to which the first sequence is mapped, the second UE may implement time synchronization by using a frequency domain synchronization algorithm when an initial time synchronization error is less than the CP duration of the symbol to which the first sequence is mapped. Compared with a time-domain-related synchronization algorithm, the frequency domain synchronization algorithm has lower complexity. An additional beneficial effect brought by longer CP duration is that the frequency domain algorithm can tolerate a larger initial time synchronization error. In addition, the CP structure may be used for frequency synchronization, and a longer CP indicates more points used for frequency synchronization and higher frequency synchronization precision.

According to the synchronization method and the apparatus that are provided in this application, a first sequence used for user synchronization is sent in a symbol of a non-starting part of each data transmission, so that when CP duration of a data sending symbol cannot satisfy a time synchronization requirement, a receive-end device can still implement time synchronization on currently received data by using the first sequence of the signal, and implement frequency synchronization by performing frequency offset estimation by using a CP structure The scope of the present invention is determined by the scope of the appended claims.

### BRIEF DESCRIPTION OF DRAWINGS

FIG. 1 is a flowchart of Embodiment 1 of a synchronization method according to this application;
FIG. 2 is a flowchart of Embodiment 2 of a synchronization method according to this application;
FIG. 3 is a schematic diagram of a preamble sequence in an example of a synchronization method according to this application;
FIG. 4 is a schematic structural diagram of Embodiment 1 of a synchronization apparatus according to this application; and
FIG. 5 is a schematic structural diagram of Embodiment 2 of a synchronization apparatus according to this application.

### DESCRIPTION OF EMBODIMENTS

According to the solution in the background, if the user equipments (user equipment, UE) perform synchronization based on the foregoing downlink synchronization signal delivered by the base station, a requirement for time synchronization between two UEs in an internet-of-vehicles system cannot be met.

In 802.11 series communications technologies, a preamble sequence including 12 identical short sequences and two long sequences is sent at the start of each data transmission, to perform automatic gain control (Automatic Gain Control, AGC), time and frequency synchronization, and channel estimation. Total time domain duration of the 12 short sequences is three orthogonal frequency division multiplexing (Orthogonal Frequency Division Multiplexing, OFDM) symbols without a cyclic prefix (Cyclic Prefix, CP), and total time domain duration of the two long sequences is two OFDM symbols without a CP.

However, the 802.11 series communications technologies are asynchronous-system-based communications technologies, and time and frequency synchronization needs to be performed in a large range during each transmission. Consequently, design of a preamble sequence is comparatively complex, and a comparatively large quantity of OFDM symbols are occupied. In addition, in the 802.11 series communications technologies, a comparatively small quantity of subcarriers are usually occupied. Therefore, even if a relatively large quantity of OFDM symbols are occupied, overheads are still comparatively low.

For the foregoing problem, in the technical solution provided in this application, receive UE can synchronously receive data transmitted by all other UEs within the coverage. The "within the coverage" means that a distance from the receive UE is less than or equal to a maximum communication distance between UEs. An NR V2X communications technology is a synchronous-system-based communications technology. Synchronization is already performed to some extent between the UEs, and time and frequency synchronization needs to be performed only in a relatively small range during each transmission. Therefore, time and frequency synchronization may also be implemented by using fewer OFDM symbols than those of a preamble sequence in the 802.11 series technologies.

The synchronization method in this application is applicable to an internet-of-vehicles system, a device-to-device (Device-to-Device, D2D) system, or other sidelink communications system; a scenario in which UE autonomously selects a sending resource; and a case with or without network-side device participation. The synchronization method is used between terminal devices (user equipments). The terminal device includes but is not limited to a vehicle, handheld user equipment, or the like, and may communicate with a network-side device, or may directly communicate with another terminal device.

The network-side device is a device with a radio resource management function that can communicate with a terminal device or serves as a central controller to assist in direct communication between terminals, for example, a base station.

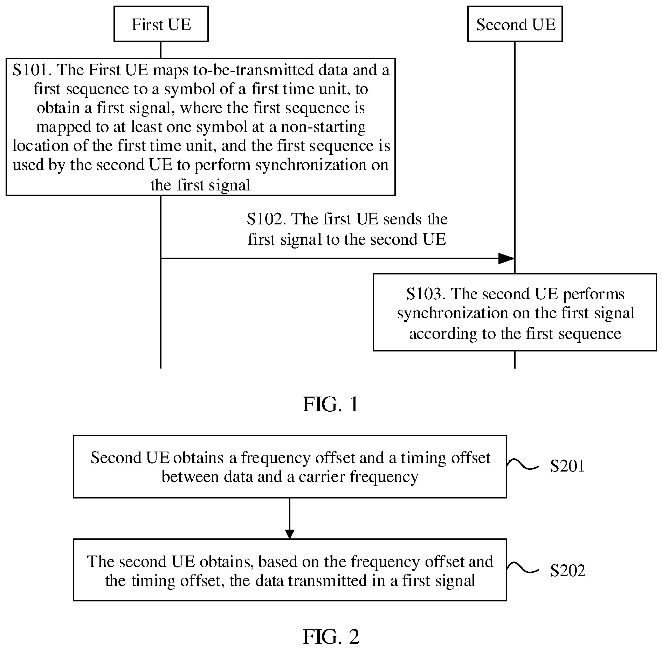

FIG. 1 is a flowchart of Embodiment 1 of a synchronization method according to this application. As shown in FIG. 1, the synchronization method is applied to an interaction process between two UEs, and specifically includes the following steps.

S101. First UE maps to-be-transmitted data and a first sequence to a symbol of a first time unit, to obtain a first signal, where the first sequence is mapped to at least one symbol of the first time unit except the 1^{st} symbol, and the first sequence is used by second UE to perform synchronization the first signal.

In this step, when the transmit-end UE needs to send data to the receive-end UE, the transmit-end UE obtains the first sequence used for synchronization, and maps the first sequence and the data together to corresponding resources when mapping the to-be-sent data to a resource. In the mapping process, the first sequence is mapped to one or more consecutive symbols at a non-starting location of a current transmission period, namely, the first time unit. For example, the first sequence is mapped to the 2^{nd} symbol, the 2^{nd} symbol and the 3^{rd} symbol, or the N^{th} symbol, or several symbols starting from the N^{th} symbol, where N is greater than 1. The first sequence is mapped to the non-starting location, avoiding a problem that a synchronization sequence is distorted and a synchronization effect is affected due to AGC of a receiver.

Correspondingly, the to-be-transmitted data may be mapped to symbols at a starting location and other idle locations of the first time unit.

In this solution, it should be understood that the first time unit is a time unit for each data transmission, and includes at least the following cases: one subframe, one TTI (or sTTI), or a plurality of bundled TTIs (or sTTIs).

The symbol in this solution may be an OFDM symbol, a single carrier frequency division multiple access (Single-carrier Frequency-Division Multiple Access, SC-FDMA) symbol, or the like. The SC-FDMA symbol is also referred to as a DFT-F-OFDM symbol, or an OFDM symbol for precoding transmission.

In this solution, in addition to use for synchronizing the first signal, the first sequence may be further used for measurement, channel estimation, and the like. The first sequence may be a ZC sequence, or an M sequence modulated by using binary phase shift keying (Binary Phase Shift Keying, BPSK), or may be another sequence. This is not limited in this solution.

Optionally, in a specific implementation of this solution, a specific manner of determining the first sequence by the first UE includes at least the following several manners:
In a first manner, the first UE determines the first sequence based on a preconfigured synchronization sequence set. To be specific, the network-side device configures, for the UE, the synchronization sequence set dedicated for synchronization, and the network-side device may directly select a proper first sequence from the synchronization sequence set as required by the UE.

In a second manner, the first UE obtains the first sequence preconfigured in a protocol.

This solution means that the first sequence is specified in a protocol, that is, a synchronization sequence used for transmission between user equipments is specified in the protocol, and when the UE needs to use the first sequence, the UE directly reads the sequence from the protocol.

In a second manner, the first UE determines the first sequence based on received information sent by a base station.

In this solution, the base station or another network-side device may send, to the UE, information used to indicate the first sequence. The information may directly carry the first sequence, or may indicate a rule, a path, or the like for obtaining the first sequence. The UE determines the first sequence based on the received information.

S102. The first UE sends the first signal to the second UE.

In this solution, after the to-be-transmitted data and the first sequence are mapped to corresponding resources to obtain the signal, the signal is sent to the second UE, so that the second UE receives the first signal that includes the data and the second sequence used for synchronization.

S103. The second UE performs synchronization on the first signal based on the first sequence.

In this step, in the process of receiving the first signal, the second UE needs to obtain the first sequence used for synchronization from the first signal, and synchronizes the first signal, namely, the data signal, based on the first synchronization sequence, to accurately obtain the data sent by the first UE.

Similar to the first UE, the second UE may also obtain the first sequence from the first signal in the following manners:

In a first manner, the second UE detects the first signal based on a preconfigured synchronization sequence set, to obtain a sequence that is carried in the first signal and that belongs to the synchronization sequence set, and determines the sequence as the first sequence.

During reception detection on a signal, reception detection is performed on the first signal based on a local synchronization sequence set preconfigured by the network-side device or in another manner, the sequence is detected and obtained at a corresponding location, and the sequence belonging to the synchronization sequence set is determined as the first sequence.

In a second manner, the first signal is detected based on a synchronization sequence preconfigured in a protocol, to obtain the first sequence.

In a second manner, the first signal is detected based on a synchronization sequence determined by using received information sent by a base station, to obtain the first sequence.

According to the synchronization method provided in this embodiment, the first sequence used for synchronization is carried in a data transmission signal each time data is transmitted, so that when CP duration of a data sending symbol cannot satisfy a time synchronization requirement, the receive-end device can still implement time synchronization on the currently received data by using the first sequence, and implement frequency synchronization by performing frequency offset estimation by using a CP structure.

FIG. 2 is a flowchart of Embodiment 2 of a synchronization method according to this application. As shown in FIG. 2, based on Embodiment 1, that the second UE receives the first signal and performs synchronization based on the first sequence in S103 specifically includes the following steps.

S201. The second UE obtains a frequency offset and a timing offset between the data and a carrier frequency.

In this step, the timing offset is an offset between a data arrival time received by the receiver and timing of the receiver itself. The timing offset may be eliminated by performing synchronization by using the first sequence.

S202. The second UE obtains, based on the frequency offset and the timing offset, the data transmitted in the first signal.

In a specific implementation of this solution, a method for determining the timing offset is as follows: A received symbol to which the first sequence is mapped is changed to a frequency domain based on current timing (where the current timing is determined by synchronizing with a global navigation satellite system (Global Navigation Satellite System, GNSS), a base station, or another UE, and/or is determined based on power detection in a period of time that elapses after current transmission starts). Pointwise multiplication is performed in a frequency domain on a conjugate of a location corresponding to the first sequence to obtain a frequency domain channel; the frequency domain channel is changed to a time domain and a modulus value is obtained; and the timing offset for this transmission is determined based on a location with a maximum modulus value. This is a low-complexity frequency domain synchronization algorithm.

Another method is a time-domain synchronization algorithm with comparatively high complexity: A time domain sequence that uses a sampling point as a starting point and whose duration is duration of the symbol to which the first sequence is mapped is selected from the received first signal, and cross-correlation to time domain representation of the first sequence is performed to obtain a modulo value; a time range is determined based on current timing and a maximum timing offset that may occur, and the foregoing steps of cross-correlation and modulo obtaining are repeated by using all sampling points in a traversal range as starting points; and the timing offset for this transmission is determined based on a starting point location corresponding to the maximum modulus value.

The timing of the current transmission is determined based on the obtained timing offset, and a starting location of a discrete Fourier transform algorithm (Fast Fourier Transformation, FFT) window is modulated, to implement time synchronization.

A frequency offset determining method is as follows: A frequency offset of the current transmission relative to the receiver is determined based on time domain duration of the symbol excluding the CP and a phase difference between a time domain sequence of equal duration starting from the end of the symbol and a time domain sequence that is in the CP of the symbol to which the first sequence is mapped and that is not affected by AGC.

A phase of each time domain sampling point of the first signal is adjusted based on the obtained frequency offset, to perform frequency offset correction on the first signal, and further implement frequency synchronization for this transmission.

The data transmitted by using the first signal may be accurately obtained by performing the foregoing processing of time synchronization and frequency synchronization.

In this solution, the first sequence used for synchronization is also carried in the data transmission signal each time the data is transmitted, so that when CP duration of a data sending symbol cannot satisfy a time synchronization requirement, the receive-end device can still implement time synchronization on the currently received data by using the first sequence and a low-complexity algorithm used for implementing time synchronization by solving a time-domain channel, and implement frequency synchronization by performing frequency offset estimation by using a CP structure

In specific implementation of the foregoing two embodiments, in the first signal, the duration of the cyclic prefix of the symbol to which the first sequence is mapped is greater than the duration of the cyclic prefix of the symbol to which the data is mapped. Synchronization enhancement is performed based on initial synchronization in the technical solution of this application; when the CP structure implements that an initial time synchronization error is less than the CP duration, the second UE can implement time synchronization by using a frequency domain synchronization algorithm; and compared with a time-domain-related synchronization algorithm, the frequency domain synchronization algorithm has lower complexity. Therefore, greater duration of the symbol to which the first sequence is mapped can make the frequency domain algorithm tolerate a larger initial time synchronization error. In addition, the CP structure may be used for frequency synchronization, and a longer CP indicates more points used for frequency synchronization and higher frequency synchronization precision.

Based on any one of the foregoing solutions, optionally, a subcarrier spacing of the symbol to which the first sequence is mapped is greater than a subcarrier spacing of the symbol to which the data is mapped. The subcarrier spacing of the symbol of the first sequence is greater than the subcarrier spacing of the data symbol, so that overheads can be further reduced. A subcarrier spacing supported by NR may be used. This solution is easy to implement.

Optionally, the duration of the cyclic prefix of the symbol to which the first sequence is mapped is less than duration of the symbol to which the first sequence is mapped.

Based on the foregoing solution, the CP of the symbol for the first sequence is smaller than the symbol for the first sequence, so that occurrence of two correlation peaks with similar values during time synchronization can be prevented, reducing additional complexity brought to processing by a receiver of the second UE.

In a specific implementation of any one of the foregoing solutions, the mapping, by first UE, a first sequence to a symbol of the first time unit includes: consecutively mapping, by the first UE, the first sequence in a frequency domain corresponding to a symbol corresponding to the first sequence, where a remaining frequency domain part is filled with 0 or the first sequence is cyclically mapped to a remaining frequency domain part.

In this solution, the UE continuously maps the first sequence in the frequency domain corresponding to the symbol corresponding to the first sequence, excluding a manner of equally-spaced mapping. This reduces additional complexity that is brought to processing of a receiver because two correlation peaks with similar values from occur during time synchronization. In addition, filling the remaining frequency domain part with 0 can make a peak-to-average power ratio of the first signal transmitted by the first UE lower, a time domain distortion of the synchronization sequence smaller, and synchronization performance better. The cyclically mapped first sequence may be used for channel estimation, and measurement of signal received power and signal received quality.

Based on any one of the foregoing solutions, a second sequence is mapped to at least one symbol, starting from the 1^{st} symbol, of the first time unit, and the second sequence is a quadrature phase shift keying (Quadrature Phase Shift Keyin, QPSK) sequence, a BPSK sequence, or a constant amplitude zero auto-correlation (Constant Amplitude Zero Auto Correlation, CAZAC) sequence. The second sequence may be used by the second UE to perform AGC.

Optionally, a subcarrier spacing of the 1^{st} symbol to which the second sequence is mapped is greater than the subcarrier spacing of the symbol to which the data is mapped. When the second sequence is mapped to only one symbol, overheads can be reduced. When the second sequence is mapped to a plurality of symbols, a time granularity may be smaller; and a quantity of symbols may be more flexibly configured, so that total overheads are smaller.

Based on any one of the foregoing solutions, the first sequence is mapped to the 2^{nd} symbol of the first time unit. That is, when the second sequence is mapped to only the 1^{st} symbol, and is mapped to only one symbol, the first sequence can be mapped to the 2^{nd} symbol. When the second sequence is mapped to a plurality of symbols, the first sequence is mapped to an immediately following symbol.

Based on the foregoing embodiments, an OFDM symbol is used as an example. A specific implementation manner of the synchronization method is as follows: A system uses a multiple access manner of time division multiple access (Time Division Multiple Access, TDMA), to avoid damage to orthogonality of the OFDM system because an arrival time difference between different data exceeds CP duration when data is sent by different UEs in a frequency division multiplexing (Frequency Division Multiplexing, FDM) manner. An SCS of 120 kHz or 240 kHz of the symbol is used by the UE to transmit data, where CP duration is corresponding NCP or ECP duration in Table 1 in the background.

The preamble sequence shown in FIG. 1 is sent on a starting part of each data transmission (one TTI (sTTI) or a plurality of consecutive bundled TTIs (sTTIs)) and the last one or half symbol at the end is a guard period in which no data is sent, to prevent interference caused due to overlapping of an end at which specific UE or some specific UEs receive the data transmission and a starting part of data transmission by another UE.

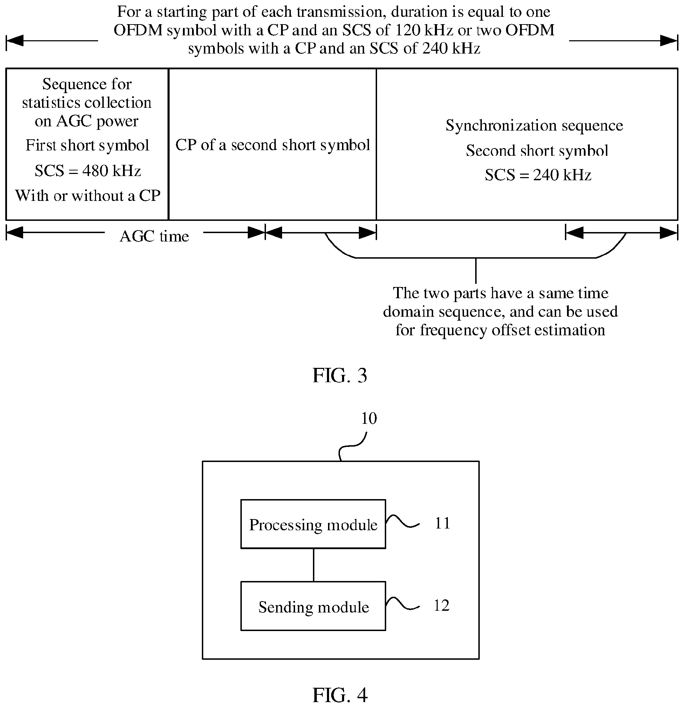

FIG. 3 is a schematic diagram of a preamble sequence in an example of a synchronization method according to this application. In the preamble sequence shown in FIG. 3, CP duration of a second short symbol is definitely greater than CP duration of an OFDM symbol whose data transmission SCS is 120 kHz or 240 kHz.

A sequence used for statistics collection on AGC power is a frequency domain M sequence or a frequency domain ZC sequence, and is mapped in frequency domain at equal intervals, and a part that is not covered by the mapping may be filled with 0 or the sequence is cycled. A sequence used for synchronization is a frequency domain M sequence or a frequency domain ZC sequence, and is mapped in frequency domain continuously, and a part that is not covered by the mapping may be filled with 0 or the sequence is cycled.

In a structure of the preamble sequence shown in FIG. 3, different subcarrier spacings are used in OFDM symbols for sending an AGC sequence and a synchronization sequence, so that the CP duration of the second short symbol is sufficiently long when duration overheads of one OFDM symbol with a CP and an SCS of 120 kHz or two OFDM symbols with a CP and an SCS of 240 kHz are used. This effectively controls overheads.

In the synchronization method provided in this embodiment, a preamble sequence with duration of one OFDM symbol with a CP and an SCS of 120 kHz or two OFDM symbols with a CP and an SCS of 240 kHz is sent during each data transmission, so that the UE implements AGC and time and frequency synchronization on data sent by another UE within a communication distance. The CP duration of the second short symbol is greater than the CP duration of the data sending symbol with the SCS of 120 kHz or 240 kHz, so that when the CP duration of the data sending OFDM symbol cannot meet a time synchronization requirement, the receiver can still implement time synchronization on currently received data by using a low-complexity algorithm used for implementing time synchronization by solving a time domain channel. A starting part of the CP is used to overcome interference of a current symbol to a next symbol caused by channel delay spread, and a remaining part may be used for frequency offset estimation. In addition, a longer CP indicates a longer sequence used for frequency offset estimation. This can improve frequency offset estimation precision.

In this solution, that the UE transmits, at a location of a second short symbol for each data transmission, a sequence used to for synchronization of the receive UE is a main improvement between the technical solution in this application and a technical solution of prior art 1. To be distinguished from an existing technology of transmitting a reference signal sequence each time, CP duration of a synchronization-sequence sending symbol is greater than CP duration of a data sending symbol.

With reference to the foregoing embodiments and examples, it can be learned that, according to the synchronization method provided in this solution, the first sequence is sent on one OFDM symbol on a non-starting part of each data transmission, and CP duration of the OFDM symbol for sending the first sequence is greater than the CP duration of the data sending symbol. When the CP duration of the OFDM symbol for sending data cannot meet a time synchronization requirement, the receiver can still implement time synchronization on the currently received data by using a low-complexity algorithm used for implementing time synchronization by solving a time domain channel.

The first sequence is sent on an OFDM symbol with a CP on a non-starting part of each data transmission, and the receiver may perform frequency offset estimation by using a CP structure, to implement frequency synchronization. A part from a starting part of the CP is used to overcome interference of a current symbol to a next symbol caused by channel delay spread, and a remaining part is the same as an end-part sequence of a corresponding OFDM symbol and may be used for frequency offset estimation of the receiver. A longer CP indicates a longer sequence used for frequency offset estimation. This can improve frequency offset estimation precision, thereby improving frequency synchronization performance.

FIG. 4 is a schematic structural diagram of Embodiment 1 of a synchronization apparatus according to this application. As shown in FIG. 4, the synchronization apparatus 10 provided in this embodiment includes:
a processing module 11, configured to map to-be-transmitted data and a first sequence to a symbol of a first time unit, to obtain a first signal, where the first sequence is mapped to at least one symbol of the first time unit except the 1^{st} symbol, and the first sequence is used by second UE to perform synchronization the first signal; and
a sending module 12, configured to send the first signal to the second UE.

The synchronization apparatus provided in this embodiment is configured to implement the synchronization method on a first device side provided by any one of the foregoing implementation manners. Implementation principles and technical effects of the synchronization apparatus are similar to those of the synchronization method. A first sequence used for user synchronization is sent in a symbol of a non-starting part of each data transmission, so that when CP duration of a data sending symbol cannot satisfy a time synchronization requirement, the second UE can still implement time synchronization on the currently received data by using a low-complexity algorithm used for implementing time synchronization by solving a time-domain channel, and implement frequency synchronization by performing frequency offset estimation by using a CP structure.

In a specific implementation of the synchronization apparatus 10, duration of a cyclic prefix of the symbol to which the first sequence is mapped is greater than duration of a cyclic prefix of a symbol to which the data is mapped.

Optionally, a subcarrier spacing of the symbol to which the first sequence is mapped is greater than a subcarrier spacing of the symbol to which the data is mapped.

Optionally, the duration of the cyclic prefix of the symbol to which the first sequence is mapped is less than duration of the symbol to which the first sequence is mapped.

Optionally, the mapping, by first UE, a first sequence to a symbol of a first time unit includes:
consecutively mapping, by the first UE, the first sequence in a frequency domain corresponding to a symbol corresponding to the first sequence, where a remaining frequency domain part is filled with 0 or the first sequence is cyclically mapped to a remaining frequency domain part.

Optionally, a second sequence is mapped to at least one symbol, starting from the 1^{st} symbol, of the first time unit, and the second sequence is a QPSK sequence, a BPSK sequence, or a CAZAC sequence.

Optionally, a subcarrier spacing of the 1^{st} symbol to which the second sequence is mapped is greater than the subcarrier spacing of the symbol to which the data is mapped.

Optionally, the first sequence is mapped to the 2^{nd} symbol of the first time unit.

Optionally, when the second sequence is mapped to the 1^{st} symbol of the first time unit, the first sequence is mapped to the 2^{nd} symbol of the first time unit.

When the second sequence is mapped to a plurality of symbols, starting from the 1^{st} symbol, of the first time unit, the first sequence is mapped to a symbol following the symbols for the second sequence.

Optionally, the first time unit includes: one subframe, one TTI, one sTTI, a plurality of bundled consecutive TTIs, or a plurality of bundled consecutive sTTIs.

Optionally, the processing module 11 is further configured to:
determine the first sequence based on a preconfigured synchronization sequence set;
obtain the first sequence preconfigured in a protocol; or
determine the first sequence based on received information sent by a base station.

The synchronization apparatuses provided in the foregoing implementation solutions are configured to implement the technical solutions of the first UE in the method embodiments. Implementation principles and technical effects of the synchronization apparatuses are similar to those of the method embodiments, and details are not described herein again.

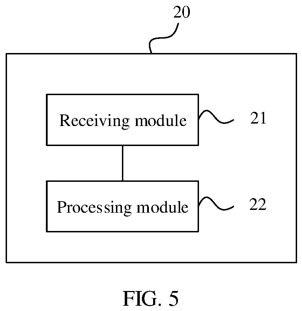

FIG. 5 is a schematic structural diagram of Embodiment 2 of a synchronization apparatus according to this application. As shown in FIG. 5, the synchronization apparatus 20 provided in this embodiment includes:
a receiving module 21, configured to receive a first signal sent by first UE, where the first signal includes data and a first sequence, and the first sequence is mapped to at least one symbol of a first time unit except the 1^{st} symbol; and
a processing module 22, configured to perform synchronization on the first signal based on the first sequence.

The synchronization apparatus provided in this embodiment is configured to implement the technical solution of the second UE in any one of the foregoing method embodiments. Implementation principles and technical solutions of the synchronization apparatus are similar to those of the method embodiments, and details are not described herein again.

Based on the foregoing embodiments, the processing module 22 is specifically configured to:
obtain a frequency offset and a timing offset between the data and a carrier frequency; and
obtain, based on the frequency offset and the timing offset, the data transmitted in the data signal.

Optionally, duration of a cyclic prefix of the symbol to which the first sequence is mapped is greater than duration of a cyclic prefix of a symbol to which the to-be-transmitted data is mapped.

Optionally, a subcarrier spacing of the symbol to which the first sequence is mapped is greater than a subcarrier spacing of the symbol to which the data is mapped.

Optionally, the duration of the cyclic prefix of the symbol to which the first sequence is mapped is less than duration of the symbol to which the first sequence is mapped.

Optionally, a second sequence is mapped to at least one symbol, starting from the 1^{st} symbol, of the first time unit, and the second sequence is a QPSK sequence, a BPSK sequence, or a CAZAC sequence.

Optionally, a subcarrier spacing of the 1^{st} symbol to which the second sequence is mapped is greater than the subcarrier spacing of the symbol to which the data is mapped.

Optionally, the receiving module 21 is specifically configured to:
receive the first sequence in the 2^{nd} symbol of the first time unit.

That is, the first sequence is mapped to the 2^{nd} symbol of the first time unit.

Optionally, when the second sequence is mapped to the 1^{st} symbol of the first time unit, the first sequence is mapped to the 2^{nd} symbol of the first time unit.

When the second sequence is mapped to a plurality of symbols, starting from the 1^{st} symbol, of the first time unit, the first sequence is mapped to a symbol following the symbols for the second sequence.

Optionally, the first time unit includes: one subframe, one TTI, one sTTI, a plurality of bundled consecutive TTIs, or a plurality of bundled consecutive sTTIs.

Optionally, the processing module 22 is further configured to:
detect the first signal based on a preconfigured synchronization sequence set, to obtain a sequence that is carried in the first signal and that belongs to the synchronization sequence set, and determine the sequence as the first sequence;
detect the first signal based on a synchronization sequence preconfigured in a protocol, to obtain the first sequence; or
detect the first signal based on a synchronization sequence determined by using received information sent by a base station, to obtain the first sequence.

The synchronization apparatus provided in any one of the foregoing embodiments is configured to implement the technical solution of the second UE in any one of the foregoing method embodiments. Implementation principles and technical solutions of the synchronization apparatus are similar to those of the method embodiments, and details are not described herein again.

This application further provides user equipment, including a memory, a processor, a transmitter, and a computer program. The computer program is stored in the memory, and the processor runs the computer program to perform the synchronization method on the first UE side provided in any one of the foregoing embodiments.

This application further provides user equipment, including a memory, a processor, a receiver, and a computer program. The computer program is stored in the memory, and the processor runs the computer program to perform the synchronization method on the second UE side provided in any one of the foregoing embodiments.

During specific implementation of the foregoing user equipments, the memory may be integrated into the processor. There is at least one processor configured to execute an executable instruction stored in the memory, namely, the computer program.

This application further provides a storage medium, including a readable storage medium and a computer program. The computer program is used to implement the synchronization method on the first UE side provided in any one of the foregoing embodiments.

This application further provides a storage medium, including a readable storage medium and a computer program. The computer program is used to implement the synchronization method on the second UE side provided in any one of the foregoing embodiments.

This application further provides a program product. The program product includes a computer program (namely, an executable instruction), and the computer program is stored in a readable storage medium. At least one processor of the user equipment may read the computer program from the readable storage medium, and the at least one processor executes the computer program, so that the user equipment implements the synchronization method of the synchronization method on the first UE side or on the second UE side provided in any one of the foregoing embodiments.

This application further provides a chip. The chip is applicable to user equipment, and the chip includes: at least one communications interface, at least one processor, and at least one memory. The communications interface, the memory, and the processor are interconnected by using a bus; and the processor invokes a computer program stored in the memory, to perform the technical solution of the synchronization method on the first UE side or on the second UE side in this application.

In a specific implementation of the user equipment, it should be understood that the processor may be a central processing unit (English: Central Processing Unit, CPU for short), or may be another general-purpose processor, a digital signal processor (English: Digital Signal Processor, DSP for short), an application-specific integrated circuit (English: Application Specific Integrated Circuit, ASIC for short), or the like. The general-purpose processor may be a microprocessor, or the processor may be any conventional processor or the like. The steps of the methods disclosed with reference to this application may be directly implemented by a hardware processor, or may be implemented by a combination of hardware and a software module in a processor.

All or some of the steps of the foregoing method embodiments may be implemented by a program instructing relevant hardware. The foregoing program may be stored in a computer-readable memory. When the program is executed, the steps of the methods in the embodiments are performed. The memory (storage medium) includes: a read-only memory (English: read-only memory, ROM for short), a RAM, a flash memory, a hard disk, a solid-state disk, a magnetic tape (English: magnetic tape), a floppy disk (English: floppy disk), an optical disc (English: optical disc), and any combination thereof.

## Claims

1. A synchronization method, wherein the method comprises:
mapping (S101), by first user equipment UE in an internet-of-vehicles system, to-be-transmitted data and a first sequence to symbols of a first time unit, to obtain a first signal, wherein the first sequence is mapped to at least one symbol of the first time unit except a 1^{st} symbol, and the first sequence is used by second UE in the internet-of-vehicles system to perform synchronization on the first signal;
sending (S102), by the first UE, the first signal to the second UE, and
the method being **characterized in that**:
duration of a cyclic prefix of the symbol to which the first sequence is mapped is greater than duration of a cyclic prefix of a symbol to which the data is mapped.

2. A synchronization method, wherein the method comprises:
receiving (S102), by second user equipment UE in an internet-of-vehicles system, a first signal sent by first UE in the internet-of-vehicles system, wherein the first signal comprises data and a first sequence, and the first sequence is mapped to at least one symbol of a first time unit except a 1^{st} symbol;
performing (S103), by the second UE, synchronization on the first signal based on the first sequence, and
the method being **characterized in that**:
duration of a cyclic prefix of the symbol to which the first sequence is mapped is greater than duration of a cyclic prefix of a symbol to which the data is mapped.

3. A synchronization apparatus, wherein the apparatus comprises:
a processing module (11), configured to map to-be-transmitted data and a first sequence to symbols of a first time unit, to obtain a first signal, wherein the first sequence is mapped to at least one symbol of the first time unit except a 1^{st} symbol, and the first sequence is used by second UE in an internet-of-vehicles system to perform synchronization on the first signal;
a sending module (12), configured to send the first signal to the second UE, and
the apparatus being **characterized by** that:
duration of a cyclic prefix of the symbol to which the first sequence is mapped is greater than duration of a cyclic prefix of a symbol to which the data is mapped.

4. The apparatus according to claim 1 or method according to claim 3, wherein a subcarrier spacing of the symbol to which the first sequence is mapped is greater than a subcarrier spacing of the symbol to which the data is mapped.

5. The apparatus according to claim 3 or 4, wherein the processing module (11) is further configured to:
determine the first sequence based on a preconfigured synchronization sequence set; or
obtain the first sequence preconfigured in a protocol; or
determine the first sequence based on received information sent by a base station.

6. The method according to claim 1 or 4, wherein before the mapping, by first user equipment UE, to-be-transmitted data and a first sequence to symbols of a first time unit, to obtain a first signal, the method further comprises:
determining the first sequence based on a preconfigured synchronization sequence set; or
obtaining the first sequence preconfigured in a protocol; or
determining the first sequence based on received information sent by a base station.

7. A synchronization apparatus, wherein the apparatus comprises:
a receiving module (21), configured to receive a first signal sent by first UE in an internet-of-vehicles system, wherein the first signal comprises data and a first sequence, and the first sequence is mapped to at least one symbol of a first time unit except a 1^{st} symbol;
a processing module (22), configured to perform synchronization on the first signal based on the first sequence, and
the apparatus being **characterized by** that:
duration of a cyclic prefix of the symbol to which the first sequence is mapped is greater than duration of a cyclic prefix of a symbol to which the data is mapped.

8. The apparatus according to claim 7, wherein the processing module (22) is specifically configured to:
obtain a frequency offset and a timing offset between the data and a carrier frequency; and
obtain, based on the frequency offset and the timing offset, the data transmitted in the data signal.

9. The method according to claim 2, wherein the performing, by the second UE, synchronization on the first signal based on the first sequence comprises:
obtaining (S201), by the second UE, a frequency offset and a timing offset between the data and a carrier frequency; and
obtaining (S202), by the second UE based on the frequency offset and the timing offset, the data transmitted in the first signal.

10. The apparatus according to any one of claims 7 to 8 or the method according to any one of claims 2 and 9, wherein a subcarrier spacing of the symbol to which the first sequence is mapped is greater than a subcarrier spacing of the symbol to which the data is mapped.

11. The apparatus according to any one of claims 7, 8 and 10, wherein the receiving module (21) is specifically configured to receive the first sequence in the 2^{nd} symbol of the first time unit.

12. A storage medium, comprising a computer-readable storage medium and a computer program comprising instructions, which when executed by a computer, cause the computer to carry out the synchronization method according to any one of claims 1, 2, 4, 6, 9 and 10.

13. A computer program product, comprising a computer program stored in a computer-readable medium, said computer program comprising instructions, which when executed by at least one processor of a user equipment, cause the user equipment to perform the synchronization method according to any one of claims 1, 2, 4, 6, 9 and 10.

14. A chip for a user equipment; the chip comprises: at least one communications interface, at least one processor, and at least one memory; the communications interface, the memory, and the processor are interconnected by using a bus; and the processor is configured to execute instructions comprised in a computer program stored in the memory, wherein, said instructions, when executed by the processor, cause said processor to perform the synchronization method according to any one of claims 1, 2, 4, 6, 9 and 10.

## Patentansprüche

1. Synchronisationsverfahren, wobei das Verfahren Folgendes umfasst:
Zuordnen (S101), durch eine erste Benutzereinrichtung (user equipment - UE) in einem Internet-der-Fahrzeuge-System, von zu übertragenden Daten und einer ersten Sequenz zu Symbolen einer ersten Zeiteinheit, um ein erstes Signal zu erhalten, wobei die erste Sequenz wenigstens einem Symbol der ersten Zeiteinheit außer einem 1 ^{ton} Symbol zugeordnet wird, und die erste Sequenz durch eine zweite UE in dem Internet-der-Fahrzeuge-System verwendet wird, um eine Synchronisation auf dem ersten Signal durchzuführen;
Senden (S102), durch die erste UE, des ersten Signals an die zweite UE, und
wobei das Verfahren **dadurch gekennzeichnet ist, dass**:
eine Dauer eines zyklischen Präfixes des Symbols, zu dem die erste Sequenz zugeordnet wird, über der Dauer eines zyklischen Präfixes eines Symbols liegt, zu dem die Daten zugeordnet werden.

2. Synchronisationsverfahren, wobei das Verfahren Folgendes umfasst:
Empfangen (S102), durch die zweite Benutzereinrichtung (UE) in einem Internet-der-Fahrzeuge-System, eines ersten Signals, das durch die erste UE in dem Internet-der-Fahrzeuge-System gesendet wird, wobei das erste Signal Daten und eine erste Sequenz umfasst und die erste Sequenz wenigstens einem Symbol einer ersten Zeiteinheit außer einem 1^{ten} Symbol zugeordnet wird;
Durchführen (S103), durch die zweite UE, der Synchronisation auf dem ersten Signal basierend auf der ersten Sequenz, und
wobei das Verfahren **dadurch gekennzeichnet ist, dass**:
die Dauer eines zyklischen Präfixes des Symbols, zu dem die erste Sequenz zugeordnet wird, über der Dauer eines zyklischen Präfixes eines Symbols liegt, zu dem die Daten zugeordnet werden.

3. Synchronisationsvorrichtung, wobei die Vorrichtung Folgendes umfasst:
ein Verarbeitungsmodul (11), das konfiguriert ist, um zu übertragende Daten und eine erste Sequenz Symbolen einer ersten Zeiteinheit zuzuordnen, um ein erstes Signal zu erhalten, wobei die erste Sequenz wenigstens einem Symbol der ersten Zeiteinheit außer einem 1^{ten} Symbol zugeordnet wird, und die erste Sequenz durch die zweite UE in einem Internet-der-Fahrzeuge-System verwendet wird, um die Synchronisation auf dem ersten Signal durchzuführen;
ein Sendemodul (12), das konfiguriert ist, um das erste Signal an die zweite UE zu senden, und
wobei die Vorrichtung durch Folgendes gekennzeichnet ist:
die Dauer eines zyklischen Präfixes des Symbols, zu dem die erste Sequenz zugeordnet wird, über der Dauer eines zyklischen Präfixes eines Symbols liegt, zu dem die Daten zugeordnet werden.

4. Vorrichtung nach Anspruch 1 oder Verfahren nach Anspruch 3, wobei ein Hilfsträgerabstand des Symbols, zu dem die erste Sequenz zugeordnet wird, über einem Hilfsträgerabstand des Symbols liegt, zu dem die Daten zugeordnet werden.

5. Vorrichtung nach Anspruch 3 oder 4, wobei das Verarbeitungsmodul (11) ferner für Folgendes konfiguriert ist:
Bestimmen der ersten Sequenz basierend auf einem vorkonfigurierten Synchronisationssequenzsatz; oder
Erhalten der ersten Sequenz, die in einem Protokoll vorkonfiguriert ist; oder
Bestimmen der ersten Sequenz basierend auf empfangenen Informationen, die durch eine Basisstation gesendet werden.

6. Verfahren nach Anspruch 1 oder 4, wobei vor dem Zuordnen, durch die erste Benutzereinrichtung (UE), zu übertragender Daten und einer ersten Sequenz zu Symbolen einer ersten Zeiteinheit, um ein erstes Signal zu erhalten, das Verfahren ferner Folgendes umfasst:
Bestimmen der ersten Sequenz basierend auf einem vorkonfigurierten Synchronisationssequenzsatz; oder
Erhalten der ersten Sequenz, die in einem Protokoll vorkonfiguriert ist; oder
Bestimmen der ersten Sequenz basierend auf empfangenen Informationen, die durch eine Basisstation gesendet werden.

7. Synchronisationsvorrichtung, wobei die Vorrichtung Folgendes umfasst:
ein Empfangsmodul (21), das konfiguriert ist, um ein erstes Signal zu empfangen, das durch die erste UE in einem Internet-der-Fahrzeuge-System gesendet wird, wobei das erste Signal Daten und eine erste Sequenz umfasst und die erste Sequenz auf wenigstens einem Symbol einer ersten Zeiteinheit außer einem 1^{ten} Symbol zugeordnet wird;
ein Verarbeitungsmodul (22), das konfiguriert ist, um die Synchronisation auf dem ersten Signal basierend auf der ersten Sequenz durchzuführen, und
wobei die Vorrichtung durch Folgendes gekennzeichnet ist:
die Dauer eines zyklischen Präfixes des Symbols, zu dem die erste Sequenz zugeordnet wird, über der Dauer eines zyklischen Präfixes eines Symbols liegt, zu dem die Daten zugeordnet werden.

8. Vorrichtung nach Anspruch 7, wobei das Verarbeitungsmodul (22) speziell für Folgendes konfiguriert ist:
Erhalten eines Frequenzversatzes und eines Zeitversatzes zwischen den Daten und einer Trägerfrequenz; und
Erhalten, basierend auf dem Frequenzversatz und dem Zeitversatz, der in dem Datensignal übertragenen Daten.

9. Verfahren nach Anspruch 2, wobei das Durchführen, durch die zweite UE, der Synchronisation des ersten Signals basierend auf der ersten Sequenz Folgendes umfasst:
Erhalten (S201), durch die zweite UE, eines Frequenzversatzes und eines Zeitversatzes zwischen den Daten und einer Trägerfrequenz; und
Erhalten (S202), durch die zweite UE, basierend auf dem Frequenzversatz und dem Zeitversatz, der in dem ersten Signal übertragenen Daten.

10. Vorrichtung nach einem der Ansprüche 7 bis 8 oder Verfahren nach einem der Ansprüche 2 und 9, wobei ein Hilfsträgerabstand des Symbols, zu dem die erste Sequenz zugeordnet wird, über einem Hilfsträgerabstand des Symbols liegt, zu dem die Daten zugeordnet werden.

11. Vorrichtung nach einem der Ansprüche 7, 8 und 10, wobei das Empfangsmodul (21) speziell konfiguriert ist, um die erste Sequenz in dem 2^{ten} Symbol der ersten Zeiteinheit zu empfangen.

12. Speichermedium, das ein computerlesbares Speichermedium und ein Computerprogramm umfasst, das Anweisungen umfasst, die, wenn sie durch einen Computer abgearbeitet werden, den Computer veranlassen, das Synchronisationsverfahren nach einem der Ansprüche 1, 2, 4, 6, 9 und 10 auszuführen.

13. Computerprogrammprodukt, das ein Computerprogramm umfasst, das in einem computerlesbaren Medium gespeichert ist, wobei das Computerprogramm Anweisungen umfasst, die, wenn sie durch wenigstens einen Prozessor einer Benutzereinrichtung abgearbeitet werden, die Benutzereinrichtung veranlassen, das Synchronisationsverfahren nach einem der Ansprüche 1, 2, 4, 6, 9 und 10 durchzuführen.

14. Chip für eine Benutzereinrichtung; wobei der Chip Folgendes umfasst: wenigstens eine Kommunikationsschnittstelle, wenigstens einen Prozessor und wenigstens ein Memory; wobei die Kommunikationsschnittstelle, das Memory und der Prozessor durch Verwenden eines Busses miteinander verbunden sind; und der Prozessor konfiguriert ist, um Anweisungen abzuarbeiten, die in dem Memory in einem Computerprogramm gespeichert sind, wobei die Anweisungen, wenn sie durch den Prozessor abgearbeitet werden, den Prozessor veranlassen, das Synchronisationsverfahren nach einem der Ansprüche 1, 2, 4, 6, 9 und 10 durchzuführen.

## Revendications

1. Procédé de synchronisation, le procédé comprenant :
le mappage (S101), par le premier équipement utilisateur UE dans un système Internet des véhicules, de données à transmettre et d'une première séquence à des symboles d'une première unité de temps, pour obtenir un premier signal, la première séquence étant mappée sur au moins un symbole de la première unité de temps à l'exception d'un 1^{er} symbole, et la première séquence étant utilisée par le second UE dans le système Internet des véhicules pour effectuer une synchronisation sur le premier signal ;
l'envoi (S102), par le premier UE, du premier signal au second UE, et
le procédé étant **caractérisé en ce que** :
la durée d'un préfixe cyclique du symbole sur lequel la première séquence est mappée est supérieure à la durée d'un préfixe cyclique d'un symbole sur lequel les données sont mappées.

2. Procédé de synchronisation, le procédé comprenant :
la réception (S102), par un second équipement utilisateur UE dans un système Internet des véhicules, d'un premier signal envoyé par le premier UE dans le système Internet des véhicules, le premier signal comprenant des données et une première séquence, et la première séquence étant mappé sur au moins un symbole d'une première unité de temps à l'exception d'un 1^{er} symbole ;
la réalisation (S103), par le second UE, d'une synchronisation sur le premier signa! sur la base de la première séquence, et
le procédé étant **caractérisé en ce que** :
la durée d'un préfixe cyclique du symbole sur lequel la première séquence est mappée est supérieure à la durée d'un préfixe cyclique d'un symbole sur lequel les données sont mappées,

3. Appareil de synchronisation, l'appareil comprenant :
un module de traitement (11), configuré pour mapper des données à transmettre et une première séquence à des symboles d'une première unité de temps, pour obtenir un premier signal, la première séquence étant mappée sur au moins un symbole de la première unité de temps à l'exception d'un 1^{er} symbole, et la première séquence étant utilisée par le second UE dans un système Internet des véhicules pour effectuer une synchronisation sur le premier signal ;
un module d'envoi (12), configuré pour envoyer le premier signal au second UE, et
l'appareil étant **caractérisé en ce que** :
la durée d'un préfixe cyclique du symbole sur lequel la première séquence est mappée est supérieure à la durée d'un préfixe cyclique d'un symbole sur lequel les données sont mappées.

4. Appareil selon la revendication 1 ou procédé selon la revendication 3, dans lequel un espacement de sous-porteuse du symbole auquel la première séquence est mappée est supérieur à un espacement de sous-porteuse du symbole sur lequel les données sont mappées.

5. Appareil selon la revendication 3 ou 4, le module de traitement (11) étant en outre configuré pour :
déterminer la première séquence sur la base d'un ensemble de séquences de synchronisation préconfiguré ; ou
obtenir la première séquence préconfigurée dans un protocole ; ou
déterminer la première séquence sur la base des informations reçues envoyées par une station de base.

6. Procédé selon la revendication 1 ou 4, dans lequel avant le mappage, par le premier équipement utilisateur UE, de données à transmettre et d'une première séquence en symboles d'une première unité de temps, pour obtenir un premier signal, le procédé comprend en outre :
la détermination de la première séquence sur la base d'un ensemble de séquences de synchronisation préconfiguré ; ou l'obtention de la première séquence préconfigurée dans un protocole ; ou
la détermination de la première séquence sur la base des informations reçues envoyées par une station de base.

7. Appareil de synchronisation, l'appareil comprenant :
un module de réception (21), configuré pour recevoir un premier signal envoyé par le premier UE dans un système Internet des véhicules, le premier signal comprenant des données et une première séquence, et la première séquence étant mappée sur au moins un symbole d'une première unité de temps à l'exception d'un 1^{er} symbole ;
un module de traitement (22), configuré pour effectuer une synchronisation sur le premier signal sur la base de la première séquence, et
l'appareil étant **caractérisé en ce que** :
la durée d'un préfixe cyclique du symbole sur lequel la première séquence est mappée est supérieure à la durée d'un préfixe cyclique d'un symbole sur lequel les données sont mappées.

8. Appareil selon la revendication 7, dans lequel le module de traitement (22) est spécifiquement configuré pour :
obtenir un décalage de fréquence et un décalage temporel entre les données et une fréquence porteuse ; et
obtenir, sur la base du décalage de fréquence et du décalage de synchronisation, les données transmises dans le signal de données.

9. Procédé selon la revendication 2, dans lequel la réalisation, par le second UE, d'une synchronisation sur le premier signal sur la base de la première séquence comprend :
l'obtention (S201), par le second UE, d'un décalage de fréquence et d'un décalage temporel entre les données et une fréquence porteuse ; et
l'obtention (S202), par le second UE sur la base du décalage de fréquence et du décalage temporel, des données transmises dans le premier signal.

10. Appareil selon l'une quelconque des revendications 7 à 8 ou procédé selon l'une quelconque des revendications 2 et 9, dans lequel un espacement de sous-porteuse du symbole sur lequel la première séquence est mappée est supérieur à un espacement de sous-porteuse du symbole sur lequel les données sont mappées.

11. Appareil selon l'une quelconque des revendications 7, 8 et 10, dans lequel le module de réception (21) est spécifiquement configuré pour recevoir la première séquence dans le 2^{ème} symbole de la première unité de temps.

12. Support de stockage, comprenant un support de stockage lisible par ordinateur et un programme informatique comprenant des instructions qui, lorsqu'elles sont exécutées par un ordinateur, amènent l'ordinateur à mettre en oeuvre le procédé de synchronisation selon l'une quelconque des revendications 1, 2, 4, 6, 9 à 10,

13. Produit-programme informatique, comprenant un programme informatique stocké sur un support lisible par ordinateur, ledit programme informatique comprenant des instructions qui, lorsqu'elles sont exécutées par au moins un processeur d'un équipement utilisateur, amènent l'équipement utilisateur à effectuer le procédé de synchronisation selon l'une quelconque des revendications 1, 2, 4, 6, 9 et 10.

14. Puce pour un équipement utilisateur ; la puce comprend : au moins une interface de communication, au moins un processeur et au moins une mémoire ; l'interface de communication, la mémoire et le processeur sont interconnectés en utilisant un bus ; et le processeur est configuré pour exécuter des instructions comprises dans un programme informatique stocké dans la mémoire, lesdites instructions, lorsqu'elles sont exécutées par le processeur, amenant ledit processeur à effectuer le procédé de synchronisation selon l'une quelconque des revendications 1, 2, 4, 6, 9 et 10.
